Europäisches Patentamt

European Patent Office

Office européen des brevets

(11) Veröffentlichungsnummer: **0 234 458**
**A2**

(12) **EUROPÄISCHE PATENTANMELDUNG**

(21) Anmeldenummer: 87102109.3

(22) Anmeldetag: 14.02.87

(51) Int. Cl.⁴: **G01V 3/08**

(30) Priorität: **19.02.86 DE 3605179**

(43) Veröffentlichungstag der Anmeldung:
**02.09.87 Patentblatt 87/36**

(84) Benannte Vertragsstaaten:
**AT CH DE FR GB IT LI SE**

(71) Anmelder: **Standard Elektrik Lorenz Aktiengesellschaft**
**Lorenzstrasse 10**
**D-7000 Stuttgart 40(DE)**

(72) Erfinder: **Becker, Helmut, Dr.**
**Noriker Strasse 19**
**D-8500 Nürnberg(DE)**

(74) Vertreter: **Hösch, Günther, Dipl.-Ing. et al**
**c/o Standard Elektrik Lorenz AG Patent- und Lizenzwesen Kurze Strasse 8 Postfach 30 09 29**
**D-7000 Stuttgart 30(DE)**

(54) **Näherungssensor.**

(57) Der Näherungssensor, der auf die Annäherung oder Entfernung eines magnetisierbaren Gegenstandes anspricht, ist erfindungsgemäß dadurch gekennzeichnet, daß er auf der Sensorseite (2) ein Substrat (3) mit wenigstens einem darauf aufgebrachten magnetfeldabhängigen Widerstand (4) aufweist und der bzw. die magnetfeldabhängigen Widerstände (4) im magnetischen Streufeld (H1) eines Permanentmagneten (5) liegen, dessen magnetische Pole (7, 8) dem bzw. den magnetfeldabhängigen Widerständen (4) derart seitlich benachbart sind, daß bei Annäherung eines magnetisierbaren Gegenstandes - (6) die magnetischen Feldlinien (H2) im wesentlichen durch diesen verlaufen. Hierdurch erhält man einen einfachen und robusten Aufbau eines Näherungssensors.

Fig.2

## Näherungssensor

Die vorliegende Erfindung bezieht sich auf einen Näherungssensor gemäß dem Oberbegriff des Anspruchs 1.

Derartige Näherungssensoren sind bisher als induktive Sensoren ausgebildet. Bei Annäherung eines magnetisierbaren Gegenstandes verändert sich beispielsweise die Induktivität einer Spule. Diese liegt im Schwingkreis eines Oszillators, so daß dessen Frequenz entsprechend verändert wird. Derartige Sensoren sind nicht nur aufwendig bezüglich des Schaltungsaufbaus, sondern es werden auch teuere Bauteile verwendet. So sollte z.B. die Induktivität starr, z.B. vergossen sein, damit nicht Induktivitätsänderungen durch Schock etc. auftreten können.

Mit der vorliegenden Erfindung soll ein Sensor vorgeschlagen werden, der aus wenigen robusten Bauteilen besteht und bei dem keine Anregungsschaltung notwendig ist.

Gelöst wird diese Aufgabe durch die im Kennzeichen des Anspruchs 1 angegebenen Merkmale. Dadurch entfällt sowohl die Oszillatorschaltung selbst als auch eine relativ teuere Induktivität.

Weitere vorteilhafte Einzelheiten der Erfindung sind in den Unteransprüchen enthalten und nachfolgend anhand des in der Zeichnung dargestellten Ausführungsbeispiels beschrieben. Dabei zeigen:

Figur 1 einen seitlich geöffneten Sensor von der Seite bei im Abstand befindlichen magnetisierbaren Gegenstand und

Figur 2 denselben bei angenähertem magnetisierbaren Gegenstand.

Mit 1 ist ein Gehäuse z.B. aus Metall, wie Aluminium, oder aus Kunststoff bezeichnet. An der Sensorseite 2 ist ein plattenförmiges Substrat 3 angebracht, auf dem innen wenigstens ein magnetfeldabhängiger Widerstand 4 aufgebracht ist. Der bzw. die magnetfeldabhängigen Widerstände 4 bestehen vorzugsweise aus einer in Form von Streifen aufgebrachten, z.B. aufgedampften oder aufgesputterten Schicht aus NiFe oder CoFeB oder FeB und einer Dicke von maximal 0,5 $\mu$m. Die Streifen 4 verlaufen beim Ausführungsbeispiel senkrecht zur Papierebene. Während oder nach dem Beschichtungsprozeß der Streifen wird diese Schicht einem derartigen Magnetfeld ausgesetzt, daß sie eine einachsige Anisotropie mit der leichten Richtung parallel zu den Streifen aufweisen. Dadurch ist gewährleistet, daß jede unterschiedliche Magnetfeldkomponente $H_1$, d.h. jede Änderung, die senkrecht zur Streifenlängsachse L und in Richtung der Ebene E der Streifen 4 bzw. des Substrats 3 auftritt, eine Änderung des Wertes des magnetfeldabhängigen Widerstandes bzw. der magnetfelddabhängigen Widerstände im gleichen Sinn bewirkt. Zweckmäßig sind vier Streifen 4 vorgesehen und zu einer Brückenschaltung zusammengeschaltet.

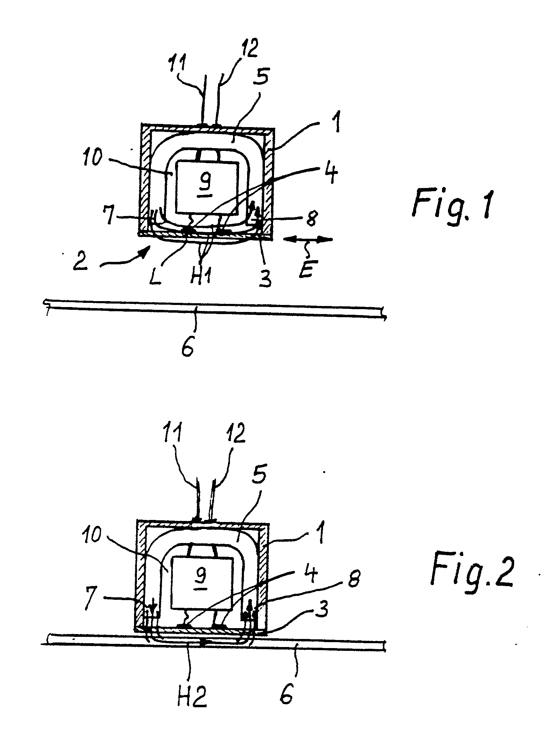

Im Gehäuse 1 ist ein hufeisen-oder U-förmig ausgebildeter Permanentmagnet 5 so angeordnet, daß bei nicht kurzgeschlossenen Polen sein Streufeld, das hier mit H1 identisch ist, durch die magnetfeldabhängigen Widerstände 4 senkrecht zu deren Streifenrichtung hindurchtritt. Dadurch ist der magnetische Widerstand derselben hochohmig. Ein weit weg vorhandener magnetisierbarer Gegenstand 6, z.B. eine Eisenplatte oder ein ferromagnetisches Band etc., hat keinen Einfluß auf die magnetischen Feldlinien (Figur 1).

Wird der magnetisierbare Gegenstand 6 an den Sensor angenähert, so verläuft das magnetische Feld H2 zwischen den beiden Polen 7, 8 des Permanentmagneten 5 immer mehr, ggf. sogar spontan, in diesem. Dadurch nimmt die magnetische Feldliniendichte in den Streifen 4 ab und deren Widerstand wird kleiner. Die Änderung des bzw. der Widerstände kann über eine Auswerteschaltung 9 aufgenommen und eventuell ausgewertet werden. Die Auswerteschaltung 9 ist vorteilhaft im Gehäuse 1, vorzugsweise in dem vom Permanentmagneten 5 gebildeten Innenraum 10 angeordnet. Durch das Gehäuse 1 können Anschlußleitungen 11, 12 für die Auswerteschaltung 9 und/oder die magnetfeldabhängigen Widerstände 4 geführt sein. Außerhalb oder im Gehäuse 1 oder in der Auswerteschaltung 9 integriert, kann noch eine Schwellwertschaltung vorgesehen sein, die beim Über-oder Unterschreiten eines vorgegebenen Prüfwertes des bzw. der magnetfeldabhängigen Widerstände 4 oder eines festen oder einstellbaren Vergleichswiderstandes etc. anspricht und ein Steuersignal ausgeben kann oder durch die über die Anschlußleitungen 11, 12 der zugeführte Strom verändert werden kann, insbesondere zwischen zwei Festwerten umgeschaltet werden kann.

### Ansprüche

1. Näherungssensor, der auf die Annäherung oder Entfernung eines magnetisierbaren Gegenstandes anspricht, **dadurch gekennzeichnet,** daß er auf der Sensorseite (2) ein Substrat (3) mit wenigstens einem darauf aufgebrachten magnetfeldabhängigen Widerstand (4) aufweist und der bzw. die magnetfeldabhängigen Widerstände (4) im magnetischen Streufeld (H1) eines Permanentmagneten (5) liegen, dessen magnetische Pole (7, 8) dem bzw. den magnetfeldabhängigen Widerständen (4) derart seitlich benachbart sind, daß bei Annäherung eines magnetisierbaren Gegenstandes (6) die magnetischen Feldlinien (H2) im wesentlichen durch diesen verlaufen.

2. Näherungssensor nach Anspruch 1, dadurch gekennzeichnet, daß der Permanentmagnet (5) hufeisen-oder U-förmig ausgebildet ist.

3. Näherungssensor nach Anspruch 1 oder 2, dadurch gekennzeichnet, daß er in einem Gehäuse (1) untergebracht ist, in dem auch eine Auswerteschaltung (9) zur Messung der Veränderung des Widerstandes des bzw. der magnetfeldabhängigen Widerstände (4) integriert ist, und daß das Gehäuse (1) mit Anschlußleitungen (11, 12) für die integrierte Auswerteschaltung (9) versehen ist.

4. Näherungssensor nach Anspruch 3, dadurch gekennzeichnet, daß die Auswerteschaltung (9) eine Schwellwertschaltung enthält, die bei Über- bzw. Unterschreiten eines Prüfwertes des Widerstandeswertes des bzw. der magnetfeldabhängigen Widerstände (4) anspricht.

5. Näherungssensor nach Anspruch 3 oder 4, dadurch gekennzeichnet, daß die Auswerteschaltung (9) innerhalb des vom Permanentmagneten (5) umschlossenen Raumes (10) vorgesehen ist.

Fig. 1

Fig.2

E-13 780
H.Becker 5